# EUROPÄISCHE PATENTSCHRIFT

(11) **EP 1 307 666 B1**
(45) Veröffentlichungstag und Bekanntmachung des Hinweises auf die Patenterteilung: **30.05.2007**
(21) Anmeldenummer: 01953919.6
(22) Anmeldetag: 14.07.2001
(51) Int. Cl.: F16D 65/095, F16D 55/226

(54) **SCHEIBENBREMSE**
DISC BRAKE
FREIN A DISQUE

(30) Priorität: 29.07.2000 DE 10037055
(43) Veröffentlichungstag der Anmeldung: 07.05.2003
(73) Patentinhaber: ROBERT BOSCH GMBH, 70442 Stuttgart (DE)
(72) Erfinder: BAUMANN, Dietmar, 71282 Hemmingen (DE); SCHMIDT, Hanniel, 76307 Karlsbad (DE); VOLLERT, Herbert, 71665 Vaihingen/Enz (DE); KELLER, Frieder, 76698 Ubstadt-Weiher (DE)
(86) Internationale Anmeldenummer: PCT/DE2001/002632
(87) Internationale Veröffentlichungsnummer: WO 2002/010609

(56) Entgegenhaltungen:
- EP-A- 0 953 785
- DE-A- 19 650 405
- DE-B- 1 019 873
- GB-A- 2 291 150
- US-A- 3 047 098
- US-A- 5 769 189

## Beschreibung

### Stand der Technik

Die Erfindung betrifft eine Scheibenbremse mit den Merkmalen des Oberbegriffs des Anspruchs 1.

Scheibenbremsen sind an sich bekannt. Sie weisen eine Bremsscheibe sowie üblicherweise zwei beiderseits der Bremsscheibe angeordnete Reibbremsbeläge auf. Die Reibbremsbeläge sind in einem Bremssattel aufgenommen. Die meisten der heute verwendeten Scheibenbremsen werden hydraulisch betätigt, d. h. die Reibbremsbeläge werden zum Erzeugen eines Bremsmoments hydraulisch gegen die Bremsscheibe gedrückt. Dabei ist es möglich, jeden Reibbremsbelag mit einem ihm zugeordneten Hydraulikkolben gegen die Bremsscheibe zu drücken. Ebenfalls ist es möglich, einen der beiden Reibbremsbeläge hydraulisch gegen die Bremsscheibe zu drücken und den anderen Reibbremsbelag durch eine über den Bremssattel übertragene Reaktionskraft gegen die andere Seite der Bremsscheibe zu drücken. Der Bremssattel ist in diesem Fall als quer zur Bremsscheibe verschieblicher Schwimmsattel ausgebildet.

Auch ist vorgeschlagen worden, Scheibenbremsen elektromechanisch zu betätigen. Die Betätigungskraft zum Drücken des einen Reibbremsbelags gegen die Bremsscheibe wird in diesem Fall mit einem Elektromotor über einen Spindeltrieb auf den Reibbremsbelag ausgeübt. Die elektromechanischen Scheibenbremsen haben jedoch den Nachteil, dass sie zur Erzeugung einer ausreichend hohen Zuspannkraft (dies ist die Kraft, mit der der Reibbremsbelag gegen die Bremsscheibe gedrückt wird) und zum schnellen Zuspannen und Lösen, also zum Erzielen einer ausreichend hohen Dynamik, einen großen und infolgedessen schweren Elektromotor benötigen. Dies ist unerwünscht, da sich die Scheibenbremse nur schlecht im Innenraum einer Felge eines Fahrzeugrades unterbringen lässt, wo sie üblicherweise angeordnet ist. Zudem ist die Scheibenbremse üblicherweise an einem Radträger angebracht und bildet eine ungefederte Masse. Ein hohes Gewicht der ungefederten Masse wirkt sich nachteilig auf eine Straßenlage eines Fahrzeugs aus und ist deswegen unerwünscht. Weiterer Nachteil bekannter, elektromechanischer Scheibenbremsen ist deren hohe Stromaufnahme, die ein elektrisches Bordnetz eines Kraftfahrzeug erheblich belastet.

Aus der US-PS 5 219 048 ist eine elektromechanisch betätigte Scheibenbremse bekannt, die zwei Paar Reibbremsbeläge aufweist, die in zwei Bremssätteln angeordnet sind. Die Bremssättel sind in Umfangsrichtung der Bremsscheibe versetzt zueinander angeordnet. Das eine Reibbremspaar wird in an sich bekannter Weise mittels eines Elektromotors über ein Zahnradgetriebe und einen Spindeltrieb gegen die Bremsscheibe gedrückt. Der Bremssattel dieses Reibbremsbelägepaars ist um eine Achse parallel zur Drehachse der Bremsscheibe schwenkbar gelagert, d. h. der Bremssattel ist in etwa in Umfangsrichtung der Bremsscheibe beweglich. Zum Drücken des zweiten Reibbremsbelägepaars gegen die Bremsscheibe weist die bekannte Scheibenbremse einen Rampenmechanismus auf. Der Rampenmechanismus weit auf jeder Seite der Bremsscheibe eine Rampenplatte auf, die mit den Reibbremsbelägen des ersten Reibbremsbelägepaars verbunden ist. Die Rampenplatten weisen Rampenflächen auf, die über reibungsmindernde Kugeln bei Verschiebung der Rampenplatten in Umfangsrichtung der Bremsscheibe die Reibbremsbeläge des zweiten Reibbremsbelägepaars gegen die Bremsscheibe drücken. Die Rampenflächen steigen in beide Richtungen an, so dass das Andrücken des zweiten Reibbremsbelägepaars gegen die Bremsscheibe unabhängig von einer Drehrichtung der Bremsscheibe ist. Die Verschiebung der Rampenplatten erfolgt beim Drücken des ersten Reibbremsbelägepaars mittels des Elektromotors gegen die Bremsscheibe, wobei in bereits beschriebener Weise sich der erste, um eine zur Drehachse der Bremsscheibe schwenkbare Bremssattel in Umfangsrichtung der Bremsscheibe bewegt. Die mit den Reibbremsbelägen des ersten Reibbremsbelägepaars verbundenen Rampenplatten bewegen sich mit dem Bremssattel mit und drücken über ihre Rampenflächen die Reibbremsbeläge des zweiten Reibbremsbelägepaar gegen die Bremsscheiben. Bei der bekannten Scheibenbremse erfolgt eine Bremsunterstützung in der Weise, dass zum Drücken des zweiten Reibbremsbelägepaars gegen die Bremsscheibe keine eigene Andrückkraft aufgebracht werden muss, sondern die zum Drücken des zweiten Reibbremsbelägepaars notwendige Kraft und Energie wird vom ersten Reibbremsbelägepaar abgeleitet. Vom Elektromotor wird ausschließlich das erste Reibbremsbelägepaar gegen die Bremsscheibe gedrückt.

Die bekannte Scheibenbremse hat den Nachteil, dass sie zwei Bremssättel benötigt und infolgedessen großbauend und schwer ist. Weiterer Nachteil der bekannten Scheibenbremse ist deren aufwendiger Aufbau.

Die DE-B 10 19 873 offenbarte eine hydraulische Scheibenbremse mit zwei Reibbremsbelägen auf jeder Seite einer Bremsscheibe, die sich über schräg zur Bremsscheibe verlaufende Abstützungen in einem Bremssattel abstützen. Die beiden Abstützungen auf einer Seite der Bremsscheibe sind einander entgegengesetzt zur Bremsscheibe geneigt. Die schräge Abstützung wandelt eine beim Bremsen von der drehenden Bremsscheibe auf den gegen sie gedrückten Reibbremsbelag wirkende Umfangskraft in eine Andruckkraft um, die den Reibbremsbelag zusätzlich zu einer hydraulisch aufgebrachten Andruckkraft gegen die Bremsscheibe drückt und die Bremskraft der Scheibenbremse somit verstärkt. Die Bremskraftverstärkung findet allerdings immer nur an einem der beiden Reibbremsbeläge statt, bei dem sich ein Spalt zwischen der zur Bremsscheibe schrägen Abstützung und der Bremsscheibe in Drehrichtung der Bremsscheibe verjüngt. Die Betätigung der Scheibenbremse erfolgt hydraulisch mit einem Kolben für jeden Reibbremsbelag, wobei die Kolben parallel zur Bremsscheibe oder parallel zur Abstützung verschiebbar sind.

### Vorteile der Erfindung

Die erfindungsgemäße Scheibenbremse mit den Merkmalen des Anspruchs 1 weist zwei Reibbremsbeläge auf einer Seite der Bremsscheibe auf. Die beiden Reibbremsbeläge können auch als ein zweigeteilter Reibbremsbelag aufgefasst werden. Des weiteren weist die Scheibenbremse für jeden der beiden Reibbremsbeläge eine schräg zur Bremsscheibe verlaufende Abstützung auf, wobei die beiden Abstützungen in entgegengesetzte Richtungen schräg zur Bremsscheibe verlaufen. Werden die Reibbremsbeläge von der Betätigungseinrichtung gegen die drehende Bremsscheibe gedrückt, so bewirkt eine Reibung zwischen der Bremsscheibe und den Reibbremsbelägen eine Kraft parallel zur Bremsscheibe in deren Umfangsrichtung und Drehrichtung auf die Reibbremsbeläge. Diese Kraft parallel zu Bremsscheibe drückt einen der beiden Reibbremsbeläge gegen die ihm zugeordnete schräge Abstützung. Als Folge übt die schräge Abstützung eine Reaktionskraft auf den Reibbremsbelag aus, die den Reibbremsbelag gegen die Bremsscheibe drückt. Mit anderen Worten bewirkt die von der drehenden Bremsscheibe beim Bremsen auf den Reibbremsbelag ausgeübte Reibungskraft eine Art Keilwirkung aus, die den Reibbremsbelag in Drehrichtung der Bremsscheibe in einen enger werdenden Spalt oder Zwischenraum zwischen der Bremsscheibe und der schräg verlaufenden Abstützung drückt. Aufgrund der Keilwirkung wird der Reibbremsbelag gegen die Bremsscheibe gedrückt.

Die beim Bremsen von der Abstützung auf den Reibbremsbelag der erfindungsgemäßen Scheibenbremse ausgeübte Kraft, die den Reibbremsbelag gegen die Bremsscheibe drückt, bewirkt eine Bremsunterstützung in dem Sinn, dass eine Gesamtandruckkraft, mit der der Reibbremsbelag beim Bremsen insgesamt gegen die Bremsscheibe gedrückt wird, größer ist als eine Andruckkraft, die von der Betätigungseinrichtung der erfindungsgemäßen Scheibenbremse unmittelbar auf den Reibbremsbelag ausgeübt wird. Die Betätigungseinrichtung der erfindungsgemäßen Scheibenbremse bringt nur einen Teil der Gesamtandruckkraft auf, mit der der Reibbremsbelag gegen die Bremsscheibe gedrückt wird. Ein übriger Teil der Gesamtandruckkraft wird von der schräg zur Bremsscheibe verlaufenden Abstützung auf den Reibbremsbelag ausgeübt, ohne dass hierfür eine Kraft oder Energie von der Betätigungseinrichtung aufgebracht werden müsste.

Durch Wahl eines Winkels, in welchem die Abstützung für den Reibbremsbelag schräg zur Bremsscheibe verläuft, lässt sich ein Verhältnis zwischen dem Anteil an der Gesamtandruckkraft, der von der Betätigungseinrichtung aufgebracht wird und dem Anteil, den die Abstützung ausübt, einstellen. Durch einen kleinen Winkel zwischen der schräg verlaufende Abstützung und der Bremsscheibe lässt sich eine hohe Bremsunterstützung erreichen, mit einer vergleichsweise niedrigen, von der Betätigungseinrichtung auf den Reibbremsbelag ausgeübten Andruckkraft lässt sich ein hohes Bremsmoment auf die Bremsscheibe ausüben. Dies hat den Vorteil, dass eine geringe Betätigungsenergie zum Betätigen der erfindungsgemäßen Scheibenbremse ausreicht und dass die erfindungsgemäße Scheibenbremse eine hohe Dynamik beim Zuspannen und Lösen aufweist. Die Abstützung muss nicht gerade verlaufen, sie kann in ihrem Verlauf unterschiedliche Winkel zu Bremsscheibe aufweisen, also beispielsweise gebogen verlaufen. Auf diese Weise lässt sich die Bremsunterstützung in Abhängigkeit von einer Zuspannkraft ändern, beispielsweise lässt sich durch einen zum Ende der Abstützung kleiner werdenden Winkel zwischen der Abstützung und der Bremsscheibe eine mit zunehmender Zuspannkraft zunehmende Bremsunterstützung erreichen.

Das Vorsehen von zwei Reibbremsbelägen auf einer Seite der Bremsscheibe und von einer Abstützung für jeden Reibbremsbelag, die in entgegengesetzten Richtungen schräg zur Bremsscheibe verlaufen, hat den Vorteil, dass beim Bremsen bei einer Drehrichtung der Bremsscheibe eine der beiden Abstützungen den von ihr abgestützten Reibbremsbelag als Folge der von der drehenden Bremsscheibe auf den Reibbremsbelag ausgeübten Reibung gegen die Bremsscheibe drückt und bei entgegengesetzter Drehrichtung der Bremsscheibe die andere Abstützung den anderen Reibbremsbelag gegen die Bremsscheibe drückt. Die Bremsunterstützung durch die schräg zu Bremsscheibe verlaufende Abstützung ist bei dieser Ausgestaltung der Erfindung drehrichtungsunabhängig.

Gemäß der Erfindung sind die beiden Abstützungen miteinander verbunden und parallel zur Bremsscheibe verschieblich geführt. Die beiden Abstützungen können beispielsweise an einem gemeinsamen Keilelement ausgebildet sein. Wie oben erläutert übt beim Bremsen eine der beiden Abstützungen eine Andruckkraft auf den von ihr abgestützten Reibbremsbelag aus, die den Reibbremsbelag gegen die Bremsscheibe drückt. Die von der drehenden Bremsscheibe beim Bremsen auf den einen Reibbremsbelag ausgeübte Reibung bewirkt eine Kraft parallel zur Bremsscheibe auf diesen Reibbremsbelag. Der Reibbremsbelag überträgt die Kraft parallel zur Bremsscheibe über die ihn abstützende Abstützung auf die andere der beiden miteinander verbundenen Abstützungen. Die andere Abstützung übt aufgrund dieser auf sie ausgeübten Kraft parallel zur Bremsscheibe durch ihren Verlauf schräg zur Bremsscheibe eine Andruckkraft auf den anderen, von ihr abgestützten Reibbremsbelag aus, die auch den anderen Reibbremsbelag gegen die Bremsscheibe drückt. Diese Ausgestaltung der Erfindung hat den Vorteil, dass sie drehrichtungsunabhängig ist. Weiterer Vorteil dieser Ausgestaltung der Erfindung ist, dass die beiden auf einer Seite der Bremsscheibe angeordneten Reibbremsbeläge mit zumindest näherungsweise gleicher Kraft gegen die Bremsscheibe gedrückt werden. Die Andruckkraft verteilt sich dadurch gleichmäßig auf beide Reibbremsbeläge, die beiden Reibbremsbeläge werden gleichmäßig abgenutzt. Des weiteren wird ein Schrägzug auf den Bremssattel vermieden, der bei Ausbildung als Schwimmsattel zu einem Verkanten des Schwimmsattels führen könnte.

Weitere Vorteile der erfindungsgemäßen Scheibenbremse sind deren kompakte Bauweise mit geringem Bauraumbedarf und geringem Gewicht.

Die Unteransprüche habe vorteilhafte Ausgestaltungen und Weiterbildungen der im Anspruch 1 angegebenen Erfindung zum Gegenstand.

Aufgrund ihrer Bremsunterstützung und ihrer hohen Dynamik eignet sich die erfindungsgemäße Scheibenbremse zu einer elektromechanischen Betätigung, wie sie in Anspruch 2 vorgesehen ist. Es genügt ein vergleichsweise kleiner Elektromotor mit geringer Stromaufnahme zum Betätigen der Scheibenbremse. Auf diese Weise ist es möglich, die erfindungsgemäße Scheibenbremse kleinbauend und leicht auszubilden, ihr Bremssattel einschließlich der Betätigungseinrichtung baut nur wenig größer als ein Bremssattel einer hydraulischen Scheibenbremse. Die erfindungsgemäße Scheibenbremse lässt sich dadurch gut innerhalb einer Felge eines Fahrzeugrads unterbringen.

Eine Ausgestaltung der Erfindung weist gemäß Anspruch 3 eine elektromechanische Betätigung der Scheibenbremse mit einem selbsthemmenden Getriebe auf. Verwendbare, selbsthemmende Getriebe sind beispielsweise ein Schneckengetriebe oder ein Spindeltrieb. Dies hat den Vorteil, dass eine einmal aufgebrachte Andruckkraft des Reibbremsbelags gegen die Bremsscheibe bei unbestromtem Elektromotor aufrechterhalten bleibt. Der Elektromotor wird nur zum Ändern der Andruckkraft bestromt. Dies hat den Vorteil einer verringerten Belastung eines elektrischen Bordnetzes eines mit der erfindungsgemäßen Scheibenbremse ausgerüsteten Kraftfahrzeugs. Des weiteren ist eine Erwärmung des Elektromotors verringert, wodurch sich dessen Baugröße weiter verringern lässt. Zusätzlicher Vorteil ist die Verwendbarkeit der Scheibenbremse als Feststellbremse, da sie ein einmal aufgebautes Bremsmoment unbestromt aufrecht erhält.

### Zeichnung

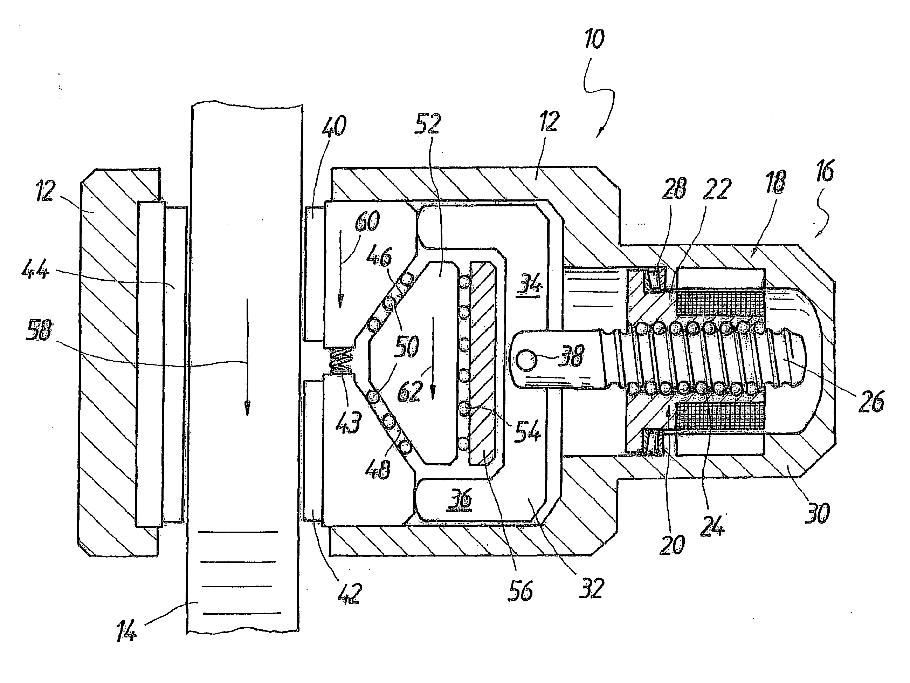

Die Erfindung wird nachfolgend anhand eines Ausführungsbeispiels der Erfindung näher erläutert. Die einzige Figur zeigt eine Schnittdarstellung einer erfindungsgemäßen Scheibenbremse mit einer Blickrichtung radial von außen auf die Bremsscheibe. Die Zeichnung ist als vereinfachte, schematisierte Darstellung zu verstehen.

### Beschreibung des Ausführungsbeispiels

Die in der Zeichnung dargestellte, erfindungsgemäße Scheibenbremse 10 weist einen Bremssattel 12 auf, der als Schwimmsattel ausgebildet ist, d. h. er ist quer zu einer Bremsscheibe 14 verschieblich. Die Scheibenbremse 10 ist elektromechanisch betätigbar, sie weist eine Betätigungseinrichtung 16 mit einem Elektromotor 18 und einem Spindeltrieb 20 auf. Der Elektromotor 18 ist als Hohlwellenmotor ausgebildet, er weist eine Hohlwelle 22 auf, die eine ebenfalls mit 22 bezeichnete Mutter des Spindeltriebs 20 bildet. Der Spindeltrieb 20 ist reibungsarm als Kugelgewindetrieb ausgebildet. Er weist die Mutter 22 auf, die über Kugeln 24 mit einer Spindel 26 in Eingriff steht. Durch drehenden Antrieb der Mutter 22 wird die Spindel 26 in axialer Richtung verschoben. Die Mutter 22 des Spindeltriebs 20, die zugleich die Welle 22 des Elektromotors 18 ist, ist über ein Axial-Kegelrollenlager 28 in axialer Richtung in einem Motor- und Getriebegehäuse 30 axial abgestützt und drehbar gelagert. Das Motor- und Getriebegehäuse 30 ist Bestandteil des Bremssattels 12. Es ist auch möglich, das Motor- und Getriebegehäuse 30 am Bremssattel 12 anzuflanschen, beispielsweise anzuschrauben.

An einem der Bremsscheibe 14 zugewandten Ende der Spindel 26 ist eine Brücke 32 befestigt, die ein Joch 34 und zwei Schenkel 36 aufweist. Die Brücke 32 ist in der Mitte ihres Jochs 34 mittels einer Bolzenverbindung 38 schwenkbar am Ende der Spindel 26 befestigt. Die beiden Schenkel 36 stehen in Richtung der Bremsscheibe 14 vom Joch 34 ab.

Auf einer der Betätigungseinrichtung 16 zugewandten Seite der Bremsscheibe 14 liegen zwei Reibbremsbeläge 40, 42 im Bremssattel 12 ein. Die beiden Reibbremsbeläge 40, 42 stützen sich in Umfangsrichtung der Bremsscheibe 14 über eine Schraubendruckfeder 43 gegeneinander ab. Zum Bremsen wird der Elektromotor 18 in einer Zuspannrichtung bestromt, wodurch die Welle 22 des Elektromotors 18 in einer Zuspannrichtung dreht. Durch ihre Drehung verschiebt die Welle 22 des Elektromotors 18, die zugleich die Mutter 22 des Spindeltriebs 20 bildet, die Spindel 26 in Richtung zur Bremsscheibe 14. Über die Brücke 32 werden die Reibbremsbeläge 40, 42 mit einer Andruckkraft gegen die Bremsscheibe 14 gedrückt und bremsen diese. Die Andruckkraft der Reibbremsbeläge 40, 42 bewirkt in an sich bekannter Weise eine Reaktionskraft auf den als Schwimmsattel ausgebildeten Bremssattel 12, der in Richtung der Betätigungseinrichtung 16 verschoben wird und dadurch einen dritten Reibbremsbelag 44, der auf einer der Betätigungseinrichtung 16 abgewandten Seite der Bremsscheibe 14 im Bremssattel 12 einliegt, gegen die der Betätigungseinrichtung 16 abgewandte Seite der Bremsscheibe 14 drückt. Die Reibbremsbeläge 40, 42, 44 werden in an sich bekannter Weise von beiden Seiten gegen die Bremsscheibe 14 gedrückt und bremsen diese. Die beiden auf einer Seite der Bremsscheibe 14 angeordneten Reibbremsbeläge 40, 42, können auch als ein zweigeteilter Reibbremsbelag aufgefasst werden. Der Reibbremsbelag 44, der auf der der Betätigungseinrichtung 16 abgewandten Seite der Bremsscheibe 14 angeordnet ist, ist näherungsweise deckungsgleich mit den beiden Reibbremsbelägen 40, 42 gemeinsam, die auf der der Betätigungseinrichtung 16 zugewandten Seite der Bremsscheibe 14 angeordnet sind.

Die nachfolgenden Ausführungen beziehen sich auf die beiden Reibbremsbeläge 40, 42, die auf der der Betätigungseinrichtung 16 zugewandten Seite der Bremsscheibe 14 im Bremssattel 12 einliegen. Die erfindungsgemäße Scheibenbremse 10 weist für jeden dieser beiden Reibbremsbeläge 40. 42 eine Abstützung 46, 48 auf, die schräg zur Bremsscheibe 14 verläuft. Dabei verlaufen die beiden Abstützungen 46, 48 in entgegengesetzten Richtungen schräg zur Bremsscheibe 14. Die Reibbremsbeläge 40, 42 stützen sich reibungsarm über Zylinderrollen 50 an den Abstützungen 46, 48 ab. Die beiden Abstützungen 46, 48 sind an einem Keilelement 52 angeordnet, das parallel zur Bremsscheibe 14 verschieblich ist. Das Keilelement 52 stützt sich reibungsarm über Zylinderrollen 54 an einem Widerlager 56 ab, welches starr im Bremssattel 12 befestigt ist. Das Widerlager 56 ist parallel zur Bremsscheibe 14 in Abstand von dieser angeordnet und stützt das Keilelement 52 senkrecht zur Bremsscheibe 14 ab.. Das Widerlager 56 bildet eine Führung 56 für das Keilelement 52, die das Keilelement 52 parallel zur Bremsscheibe 14 verschieblich führt. Das Keilelement 52 und das Widerlager 56 sind auf einer der Betätigungseinrichtung zugewandten Seite der Bremsscheibe 14 in einem Innenraum der Brücke 32 angeordnet.

Die Funktion der Abstützungen 46, 48, des Keilelements 52 und des Widerlagers 56 ist folgende: Zum Bremsen werden die beiden auf einer Seite der Bremsscheibe 14 angeordneten Reibbremsbeläge 40, 42 mittels der Betätigungseinrichtung 16 über die Brücke 32 gegen die Bremsscheibe 14 gedrückt. Dies ist oben erläutert worden. Die drehende Bremsscheibe 14 bewirkt über eine Reibung eine Kraft parallel zur Bremsscheibe 14 auf die beiden Reibbremsbeläge 40, 42. Bei einer angenommenen Drehrichtung der Bremsscheibe 14 in Richtung des Pfeils 58 wird der in der Zeichnung oben dargestellte Reibbremsbelag 40 in Richtung des anderen Reibbremsbelags 42 gedrückt. Der andere, in der Zeichnung unten dargestellte Reibbremsbelag 42 stützt sich gegen die durch Reibung von der Bremsscheibe 14 auf ihn ausgeübte Kraft in an sich bekannter Weise am Bremssattel 12 ab. Der in der Zeichnung oben dargestellte Reibbremsbelag 40 ist ein in Drehrichtung 58 der Bremsscheibe 14 vorderer Reibbremsbelag 40, der in der Zeichnung unten dargestellte Reibbremsbelag 42 ist ein in Drehrichtung 58 der Bremsscheibe 14 hinterer Reibbremsbelag 42. Der in Drehrichtung 58 der Bremsscheibe 14 vordere Reibbremsbelag 40 stützt sich gegen die von der drehenden Bremsscheibe 14 durch Reibung auf ihn ausgeübte Kraft an der ihm zugeordneten Abstützung 46 ab. Durch ihren Verlauf schräg zur Bremsscheibe 14 übt die Abstützung 46 eine Reaktionskraft auf den Reibbremsbelag 40 aus, die den Reibbremsbelag 40 zusätzlich zu der von der Betätigungseinrichtung 16 über die Brücke 32 auf ihn ausgeübten Andruckkraft gegen die Bremsscheibe 14 drückt. Die schräg zur Bremsscheibe verlaufende Abstützung 46 bewirkt somit eine Bremsunterstützung, die gesamte Andruckkraft, mit der der Reibbremsbelag 40 gegen die Bremsscheibe 14 gedrückt wird, ist größer als die von der Betätigungseinrichtung 16 auf den Reibbremsbelag 40 ausgeübte Andruckkraft. Die von der drehenden Bremsscheibe 14 durch Reibung auf den in Drehrichtung 58 vorderen Reibbremsbelag 40 ausgeübte Kraft parallel zur Bremsscheibe ist in der Zeichnung symbolisch mit dem Pfeil 60 dargestellt.

Über die ihm zugeordnete Abstützung 46 überträgt der in Drehrichtung 58 der Bremsscheibe 14 vordere Reibbremsbelag 40 die von der drehenden Bremsscheibe 14 beim Bremsen durch Reibung auf ihn ausgeübte Kraft 60 auf das Keilelement 52. Da sich das Keilelement 52 senkrecht zur Bremsscheibe 14 am Widerlager 56 abstützt und infolgedessen nur parallel zur Bremsscheibe 14 verschieblich ist, wirkt die vom Reibbremsbelag 40 auf das Keilelement 52 ausgeübte Kraft parallel zur Bremsscheibe 14 in deren Drehrichtung 58. Die vom Reibbremsbelag 40 auf das Keilelement 52 ausgeübte Kraft ist in der Zeichnung mit Pfeil 62 angedeutet. Über die andere Abstützung 48, die dem in Drehrichtung 58 der Bremsscheibe 14 hinteren Reibbremsbelag 42 zugeordnet ist, übt das Keilelement 52 eine Kraft auf diesen Reibbremsbelag 42 aus. Da der Reibbremsbelag 42 in Richtung parallel zur Bremsscheibe 14 am Bremssattel 12 abgestützt ist, wirkt die vom Keilelement 52 über die schräg zur Bremsscheibe 14 verlaufende Abstützung 48 auf den Reibbremsbelag 42 ausgeübte Kraft senkrecht zur Bremsscheibe 14, das Keilelement 52 drückt den in Drehrichtung 58 der Bremsscheibe 14 hinteren Reibbremsbelag 42 gegen die Bremsscheibe 14. Die in beschriebener Weise vom Keilelement 52 auf den in Drehrichtung 58 der Bremsscheibe 14 hinteren Reibbremsbelag 42 ausgeübte Andruckkraft ist zumindest in etwa eben so groß wie die vom Keilelement 52 auf den in Drehrichtung 58 der Bremsscheibe 14 vorderen Reibbremsbelag 40 ausgeübte Andruckkraft. Es werden dadurch beide Reibbremsbeläge 40, 42 mit zumindest näherungsweise gleicher Andruckkraft gegen die Bremsscheibe 14 gedrückt. Die vom Keilelement 52 auf den in Drehrichtung 58 der Bremsscheibe 14 hinteren Reibbremsbelag 42 ausgeübte Andruckkraft bewirkt auch an diesem Reibbremsbelag 42 eine Bremsunterstützung, die vom Keilelement 52 auf den Reibbremsbelag 42 ausgeübte Andruckkraft wirkt zusätzlich zu der von der Brücke 32 der Betätigungseinrichtung 16 ausgeübten Andruckkraft auf diesen Reibbremsbelag 42.

Da die erfindungsgemäße Scheibenbremse 10 symmetrisch ausgebildet ist, ist sie drehrichtungsunabhängig, die beschriebene Bremsunterstützung über die Abstützungen 46, 48 und das Keilelement 52 ist auch bei entgegengesetzter Drehrichtung der Bremsscheibe 14 wirksam.

Der Spindeltrieb 20 der Betätigungseinrichtung 16 ist selbsthemmend ausgebildet. Dadurch bleibt eine einmal vom Elektromotor 18 über den Spindeltrieb 20 aufgebrachte Andruckkraft der Reibbremsbeläge 40, 42, 44 bei unbestromtem Elektromotor 18 unverändert aufrechterhalten. Der Elektromotor 18 wird deswegen nur zum Ändern der Andruckkraft der Reibbremsbeläge 40, 42, 44 gegen die Bremsscheibe 14 bestromt. Die Scheibenbremse 10 eignet sich durch die selbsthemmende Ausbildung des Spindeltriebs 20 auch als Feststellbremse, da sie eine einmal aufgebracht Andruckkraft und damit ein auf die Bremsscheibe 14 ausgeübtes Bremsmoment bei unbestromten Elektromotor 18 unverändert aufrecht erhält.

## Patentansprüche

1. Scheibenbremse, mit einer Bremsscheibe (14), mit zwei Reibbremsbelägen (40, 42), die beide auf einer Seite der Bremsscheibe (14) angeordnet sind, und mit einer Betätigungseinrichtung (16), mit der die beiden Reibbremsbeläge (40, 42) gegen die Bremsscheibe (14) drückbar sind, wobei die Scheibenbremse (10) für jeden der beiden Reibbremsbeläge (40, 42) eine schräg zur Bremsscheibe (14) verlaufende Abstützung (46, 48) aufweist, wobei die beiden Abstützungen (46, 48) in entgegengesetzten Richtungen schräg zur Bremsscheibe (14) verlaufen, **dadurch gekennzeichnet, dass** die beiden Abstützungen (46, 48) miteinander verbunden sind, und dass die beiden Abstützungen (46, 48) eine Führung (56) aufweisen, mit der sie parallel zur Bremsscheibe (14) verschieblich geführt sind.

2. Scheibenbremse nach Anspruch 1, **dadurch gekennzeichnet, dass** die Betätigungseinrichtung (16) einen Elektromotor (18) und ein Rotations/Translations-Umsetzungsgetriebe (20) zum Drücken der Reibbremsbeläge (40, 42) gegen die Bremsscheibe (14) aufweist.

3. Scheibenbremse nach Anspruch 1, **dadurch gekennzeichnet, dass** die Betätigungseinrichtung (16) einen Elektromotor (18) und ein selbsthemmendes Getriebe (20) aufweist.

4. Scheibenbremse nach Anspruch 1, **dadurch gekennzeichnet, dass** die Scheibenbremse (10) eine Brücke (32) aufweist, über die mit der Betätigungseinrichtung (16) die beiden Reibbremsbeläge (40, 42) gemeinsam gegen die Bremsscheibe (14) drückbar sind.

5. Scheibenbremse nach Anspruch 4, **dadurch gekennzeichnet, dass** die Brücke (32) schwenkbar mit der Betätigungseinrichtung (16) verbunden ist.

## Claims

1. Disc brake, having a brake disc (14), having two friction brake linings (40, 42) which are both arranged on one side of the brake disc (14), and having an actuating device (16) by means of which the two friction brake linings (40, 42) can be pressed against the brake disc (14), the disc brake (10) having one support (46, 48), which runs obliquely with respect to the brake disc (14), for each of the two friction brake linings (40, 42), and the two supports (46, 48) running obliquely with respect to the brake disc (14) in opposite directions, **characterized in that** the two supports (46, 48) are connected to one another and **in that** the two supports (46, 48) have a guide (56), by means of which they are guided in a displaceable manner parallel to the brake disc (14).

2. Disc brake according to Claim 1, **characterized in that** the actuating device (16) has an electric motor (18) and a rotation/translation conversion mechanism (20) for pressing the friction brake linings (40, 42) against the brake disc (14).

3. Disc brake according to Claim 1, **characterized in that** the actuating device (16) has an electric motor (18) and a self-locking mechanism (20).

4. Disc brake according to Claim 1, **characterized in that** the disc brake (10) has a bridge (32), via which the two friction brake linings (40, 42) can be commonly pressed against the brake disc (14) by means of the actuating device (16).

5. Disc brake according to Claim 4, **characterized in that** the bridge (32) is pivotably connected to the actuating device (16).

## Revendications

1. Frein à disque ayant un disque de frein (14) portant de chaque côté une garniture de friction (40, 42) et un dispositif d'actionnement (16) pour la mise en pression des deux garnitures (40, 42) sur le disque de frein (14), le frein à disque (10) présentant pour chaque garniture de friction (40, 42) un appui (46, 48) oblique par rapport au disque de frein (14), les deux appuis (46, 48) étant inclinés à l'inverse par rapport au disque de frein (14),
**caractérisé en ce que**
les deux appuis (46, 48) sont reliés entre eux et présentent un guidage (56) par lequel ils se déplacent parallèlement au disque de frein (14).

2. Frein à disque selon la revendication 1,
**caractérisé en ce que**
le dispositif d'actionnement (16) comprend un moteur électrique (18) et un engrenage de transformation de rotation en translation (20), pour mettre en pression les garnitures de frein (40, 42) sur le disque de frein (14).

3. Frein à disque selon la revendication 1,
**caractérisé en ce que**
le dispositif d'actionnement (16) comprend un moteur électrique (18) et une transmission autoblocante (20).

4. Frein à disque selon la revendication 1,
**caractérisé en ce qu'**
il comporte un pont (32) par lequel les deux garnitures de frein (40, 42) peuvent être mises ensemble en pression sur le disque de frein (14) par le dispositif d'actionnement (16).

5. Frein à disque selon la revendication 4,
**caractérisé en ce que**
le pont (32) est relié avec possibilité de basculement au dispositif d'actionnement (16).
